# EUROPÄISCHE PATENTSCHRIFT

(11) **EP 1 867 520 B1**
(45) Veröffentlichungstag und Bekanntmachung des Hinweises auf die Patenterteilung: **11.05.2011**
(21) Anmeldenummer: 07010938.4
(22) Anmeldetag: 04.06.2007
(51) Int. Cl.: B60P 1/00, B60R 5/04

(54) **Ladeboden für einen Laderaum eines Fahrzeuges**
Loading floor for the cargo area of a vehicle
Sol de chargement pour un espace de chargement d'un véhicule

(30) Priorität: 16.06.2006 AT 10322006
(43) Veröffentlichungstag der Anmeldung: 19.12.2007
(73) Patentinhaber: Klatt, Peter, Ing., 4893 Zell am Moos (AT)
(72) Erfinder: Klatt, Peter, Ing., 4893 Zell am Moos (AT)
(74) Vertreter: Secklehner, Günter

(56) Entgegenhaltungen:
- EP-A- 0 603 140
- EP-A- 0 863 044
- DE-A1- 2 032 958
- DE-A1-102004 051 622
- DE-A1-102005 009 384

## Beschreibung

Die Erfindung betrifft einen Ladeboden für einen Laderaum und ein Fahrzeug gemäß den Oberbegriffen der Ansprüche 1 und 18.

Aus der DE 298 07 772 U1, DE 100 19 645 A1, DE 197 09 114 A1, DE 199 04 714 C2 sind gattungsgemäße Ladeböden für einen Laderaum eines Fahrzeuges bekannt, mittels dem die Manipulation, insbesondere das Beladen und Entladen des Laderaumes erheblich erleichtert wird. Hierzu ist im Laderaum eine Transportvorrichtung vorgesehen, die einen Rahmen mit an diesem gelagerter Antriebsrolle und Umlenkrolle sowie ein um diese geführtes, endlos umlaufendes Transportband aufweist. Die Antriebsrolle ist über einen Elektromotor antreibbar und mit dem Transportband reibschlüssig verbunden, sodass mit der Beaufschlagung der Antriebsrolle mit einem Drehmoment das Ladegut, beispielsweise eine Getränkekiste, ein Einkaufsbehälter und dgl., relativ zum Laderaum in eine Beladungsposition bewegt wird. Durch das motorisch unterstütze Beladen und Entladen wird eine komfortable Handhabung für den Bediener geschaffen. Der Elektromotor ist mit einer Bedieneinheit zur Steuerung der Umlaufrichtung beim Beladen und Entladen des Transportbandes sowie des Anfahr- und Anhaltevorganges verbunden. Die Transportvorrichtung ist über die gesamte Laderaumbreite ausgebildet und erstreckt sich zwischen dem Rücksitz und einer Beladungsöffnung im Heck des Fahrzeuges.

Nach einer Ausführung in der DE 100 55 826 A1 ist eine erste Transportvorrichtung am Boden des Laderaumes und zweite Transportvorrichtung an der an einem Sitzgestell schwenkbaren Rückenlehne des Rücksitzes gelagert, derart, dass in der geschwenkten Stellung der Rückenlehne die Transportvorrichtungen in einer Ebene liegen und eine durchgehende Ladefläche zwischen den Vordersitzen und der Beladungsöffnung im Heck ausbilden. Dadurch ist eine Vergrößerung des Aufnahmevolumens des Laderaums möglich und dennoch eine komfortable Beladung und Entladung der Ladefläche möglich.

Die DE 20 32 958 A1 offenbart einen Ladeboden für einen Omnibus, der durch eine Transportvorrichtung zum Be- und Entladen eines Laderaumes des Omnibusses gebildet ist, welche Transportvorrichtung einen Rahmen, eine an diesem gelagerte Antriebsrolle und Umlenkrolle sowie ein um diese geführtes, endlos umlaufendes Transportband aufweist. Die Antriebsrolle ist an einen Elektromotor gekuppelt, der über einen Schalter (Bedieneinheit) im Bereich der Beladungsöffnung betätigt wird. Im Laderaum des Omnibusses ist ferner ein Endschalter vorgesehen, der den Elektromotor dann abschaltet, wenn ein Ladegut die der Beladungsöffnung des Laderaumes gegenüberliegende Karosseriewand erreicht hat. Daraus ergibt sich aber der maßgebliche Nachteil, dass es am Geschick des Bedieners liegt, durch die Bedieneinheit das Ladegut rechtzeitig in einer Entladungsposition nahe der Beladungsöffnung zu stoppen. Eine Fehlbedienung kann dazu führen, dass ein zu entladendes Ladegut nicht rechtzeitig in der Entladungsposition angehalten wird und aus dem Laderaum hinausfällt. Dies kann einerseits zur Beschädigung des Ladegutes und andererseits zu Verletzungsgefahren des Bedieners führen.

Aus der DE 10 2004 051 622 A1 ist ein Ladeboden für einen Gepäckraum eines Fahrzeugs bekannt, der aus mehreren Ladeboden-Elementen besteht und in einem Modul aufgenommen ist, das im Gepäckraum klappbar angeordnet ist und nach oben hin verschwenkt werden kann, um eine in einer unterhalb des Ladebodens verlaufenden Ebene vorgesehene Mulde zugänglich zu machen.

Der Erfindung liegt die Aufgabe zugrunde, einen Ladeboden in einem Kraftfahrzeug zu schaffen, der eine komfortable Handhabung eines Ladegutes innerhalb eines Laderaumes des Kraftfahrzeuges und einen sicheren Transport eines Ladegutes ermöglicht sowie sich durch seine zuverlässige Betriebsweise auszeichnet.

Die Aufgabe der Erfindung wird durch die Merkmale im Kennzeichenteil der Ansprüche 1 und 18 gelöst. Von Vorteil ist, dass über die in den Umlenkbereichen angeordneten Sensoren das Ladegut detektiert und die Abschaltung der Transportvorrichtung zuverlässig erfolgt, wenn das Ladegut entweder die Beladungsposition oder die Entladungsposition erreicht hat. Die Sensoren erfüllen die Aufgabe eines Endlagenschalters, sodass sichergestellt werden kann, dass jenes in die Beladungs- oder Entladungsposition zu bewegende Ladegut durch gezielte Steuerung der Antriebsrolle im Laderaum kontrolliert bzw. lagepositioniert angehalten wird.

Von Vorteil ist auch die Ausbildung nach Anspruch 2, nach welcher der ohnehin vorhandene Raum im Spaltbereich besser ausgenutzt werden kann und die Sensoren gegen äußere Umwelteinflüsse geschützt sind, da der Rahmen eine Schutzvorrichtung für die Sensoren ist und zudem wird ein sehr kompakter Aufbau der Transportvorrichtung erreicht.

Eine vorteilhafte Ausführung ist auch im Anspruch 3 beschrieben, wodurch über die Sensoren die Anwesenheit eines Ladegutes in der Beladungs- oder Entladungsposition auf berührungslosem Wege erfasst werden kann.

Gemäß Anspruch 4 sind unterschiedliche Befestigungsvarianten der Sensoren angegeben und kann je nach dem zur Verfügung stehenden Laderaumvolumen die jeweils günstigste Variante eingesetzt werden.

Nach der Weiterbildung der Erfindung gemäß Anspruch 5 kann in vorteilhafter Weise von der Schaltleiste einerseits die Funktion eines Endlagenschalters und andererseits eine Sicherheitsfunktion erfüllt werden. Letztere ergibt sich daraus, dass die Schaltfläche in betätigter und unbetätigter Schaltstellung des Sensors in den Spaltbereich vorsteht, sodass der verbleibende Spalt zwischen der Außenseite des Transportbandes und der Schaltfläche nur noch eine Breite aufweist, die geringer ist als eine Breite eines Fingers vom Bediener. Dadurch wird die Verletzungsgefahr für den Bediener durch Klemmen, Quetschen oder Abscheren eines Fingers zuverlässig vermieden. Damit erfüllt der erfindungsgemäße Ladeboden auch die hohen Anforderungen an die sicherheitstechnischen Aspekte.

Die Weiterbildung nach Anspruch 6 erweist sich als Vorteil, da durch die Schwenkmöglichkeit der Schaltleiste gegenüber dem Rahmen eine sichere Schaltfunktion selbst bei Erschütterungen gewährleistet wird, wenn ein Ladegut in der Beladungs- oder Entladungsposition ankommt.

Besonders vorteilhaft sind auch die Ausgestaltungen nach den Ansprüchen 7 bis 9, da über die elastisch verformbare Schaltfläche eine sichere Schaltfunktion gewährleistet ist und der zumindest zum Teil aus einem elastisch verformbaren Kunststoff hergestellte Schaltkörper ein Dämpfungsorgan ausbildet, welches die beim Anstoßen des Ladegutes an der Schaltfläche hervorgerufene Aufprallenergie durch Umwandlung in Verformungsenergie zumindest zum Teil absorbieren kann und dadurch das Ladegut abgebremst, ruckfrei und besonders sanft in die endgültige Beladungs- oder Entladungsposition einfährt. Die Höhe der zu absorbierenden Energie kann durch Größe und/oder Material des Schaltkörpers eingestellt werden.

Die Ausgestaltung nach Anspruch 10 erweist sich von Vorteil, da unabhängig von der Lage, in welcher das Ladegut auf die Ladefläche aufgesetzt wird, die Funktion der Endlagenabschaltung erfüllt wird.

Vorteilhaft ist auch die Weiterbildung nach Anspruch 11, wodurch das Obertrum des Transportbandes sich auf einer Gleitfläche flächig abstützt, sodass nun auch schwere Ladegüter, selbst mit einer starken Punktbelastung, mittels des Transportbandes im Laderaum zwischen der Beladungs- und Entladungsposition, ohne Beschädigung des Transportbandes, bewegt werden können. Durch die flächige Abstützung braucht das Transportband keine besondere Reißfestigkeit aufweisen.

Gemäß der Ausbildung nach Anspruch 12 ist zwischen dem Obertrum und dem Untertrum vom Transportband ein Schallabsorptionsbauelement angeordnet, wodurch die Fahrgeräusche im Fahrzeuginnenraum auf ein Minimum reduziert werden und für den Menschen ein angenehmes, akustisches Umgebungsklima geschaffen wird.

Durch die Ausgestaltung nach Anspruch 13 ist die Transportvorrichtung sehr kompakt aufgebaut.

Durch die Integration des Elektromotors und der Bremseinrichtung innerhalb der Antriebsrolle wird ein optimaler Schutz gegen äußere Umwelteinflüsse erreicht, da die Antriebsrolle selbst Schutzvorrichtung für Elektromotor und der Bremseinrichtung ist, gemäß den Ansprüchen 14 und 15. Die Antriebsrolle zeichnet sich durch eine lange Lebensdauer, hohe Leistung und eine einfache Installation, Reversierbetrieb und eine dynamische Bremse aus.

Durch die Weiterbildung nach Anspruch 16 wird eine komfortable Bedienung der Transportvorrichtung und wahlweise eine Änderung der Umlaufrichtung des Transportbandes ermöglicht.

Eine vorteilhafte Ausbildung der Erfindung ist auch im Anspruch 17 beschrieben, da durch die formschlüssige Führung des Transportbandes entlang von Führungselementen am Rahmen, selbst bei Kurvenfahrten und Ladegütern mit hohem Gewicht, das Transportband relativ zum Rahmen gehalten und eine unerwünschte Verlagerung des Transportbandes in Richtung der Drehachse der Antriebs- bzw. Umlaufrolle vermieden wird. Dadurch kann eine ruckartige Verlagerung des Transportbandes und damit ein seitliches Wegkippen eines Ladegutes infolgedessen vermieden werden und wird sichergestellt, dass die Längsränder des Transportbandes beim Hochlauf der Transportvorrichtung entfernt von den Längsträgern sind und damit ein verschleißarmer Betrieb der Transportvorrichtung möglich ist. Zudem wird eine hohe Laufruhe des Transportbandes auch bei hohen Umlaufgeschwindigkeiten sichergestellt. Da die Antriebs- und Umlenkrolle (Umlenkelement) ohne Führungsnuten hergestellt sind und das Transportband an der zwischen den Führungselementen angeordneten Stützauflage flächig aufliegt, kann der Ladeboden mit einer sehr kleinen Bauhöhe ausgeführt werden. Ferner können kostengünstige Antriebs- und Umlenkrollen eingesetzt werden.

Von Vorteil ist auch die Ausbildung nach Anspruch 19, da durch die Verstellbarkeit des Ladebodens relativ zur Mulde die Zugänglichkeit zu letzterer erhalten bleibt.

Nach Anspruch 20 ist der Ladeboden zwischen der Öffnungs- und Schließstellung schwenkbar, wodurch eine komfortable Handhabung ermöglicht wird.

Von Vorteil ist auch die Ausgestaltung nach Anspruch 21, wodurch die vergleichsweise zur Umlenkrolle ein höheres Gewicht aufweisende Antriebsrolle koaxial zur Schwenk- bzw. Lagerachse oder am selben Ende des Ladebodens exzentrisch zur Lager- bzw. Schwenkachse angeordnet ist und dadurch die Verstellung aus der Schließstellung in die Öffnungsstellung mit geringem Kraftaufwand möglich ist.

Schließlich ist auch die Weiterbildung nach Anspruch 22 von Vorteil, wodurch der erfindungsgemäße Ladeboden auch in Sportwagen mit relativ niedriger Innenhöhe eingesetzt werden kann.

Die Erfindung wird im nachfolgenden anhand der in den Zeichnungen dargestellten Ausführungsbeispiele näher erläutert.

Es zeigen:
- Fig. 1: eine perspektivische Ansicht auf einen Heckteil eines Fahrzeuges, insbesondere eines Personenkraftwagens, mit dem erfindungsgemäßen Ladeboden, in vereinfachter Darstellung;
- Fig. 2: den Ladeboden nach Fig. 1 mit einer Transportvorrichtung zum Be- und Entladen eines Laderaumes des Fahrzeuges;
- Fig. 3: die Transportvorrichtung nach Fig. 2 in explosionsartiger Darstellung;
- Fig. 4: die Transportvorrichtung, geschnitten gemäß den Linien IV-IV in Fig. 2;
- Fig. 5: die Transportvorrichtung, geschnitten gemäß den Linien V-V in Fig. 2;
- Fig. 6: die Transportvorrichtung mit entferntem Transportband und entfernter Stützauflage, in Draufsicht und vereinfachter Darstellung;
- Fig. 7: eine Ausschnittsvergrößerung von Fig. 5 mit Ansicht auf eine Längsseite der Transportvorrichtung mit den Führungselementen am Rahmen und Transportband;
- Fig. 8: eine Ausschnittsvergrößerung von Fig. 4 aus einem vorderen Ende der Transportvorrichtung mit einer ersten Ausführung eines Sensors in unbetätigter Schaltstellung;
- Fig. 9: den Sensor nach Fig. 8 in durch das Ladegut betätigter Schaltstellung;
- Fig. 10: einen Ausschnitt vom vorderen Ende der Transportvorrichtung mit einer anderen Ausführung eines Sensors in unbetätigter Schaltstellung, in vereinfachter und geschnittener Darstellung;
- Fig. 11: eine Ausschnittsvergrößerung von Fig. 10 aus dem Umlenkbereich mit dem Sensor in durch das Ladegut betätigter Schaltstellung;
- Fig. 12: einen Ausschnitt eines Laderaumes und den in die Schließstellung abgeschwenkten Ladeboden, in Seitenansicht, teilweise geschnitten und vereinfachter Darstellung;
- Fig. 13: einen Ausschnitt eines Laderaumes und den in die Öffnungsstellung hochgeschwenkten Ladeboden, in Seitenansicht, teilweise geschnitten und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

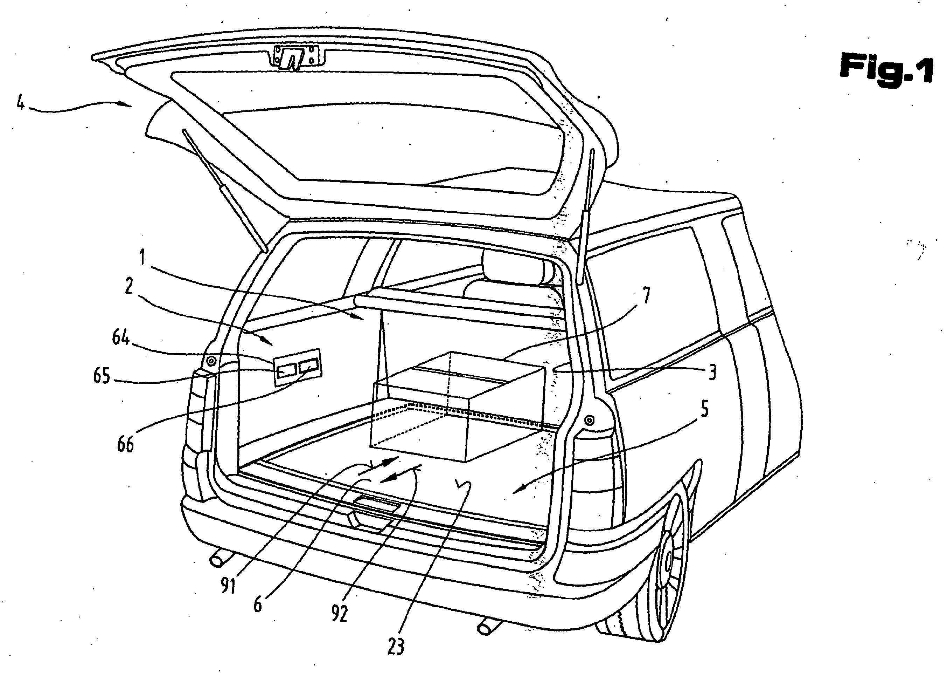

Das in Fig. 1 schematisch und ausschnittweise mit seinem Heckbereich dargestellte Fahrzeug, insbesondere Personenkraftwagen, weist einen hinter einem Rücksitz 1 angeordneten Gepäckoder Laderaum 2 auf, der von einer im Heck angeordneten, rückwärtigen Beladungsöffnung 3 aus be- und entladen werden kann. Die Beladungsöffnung 3 ist durch eine Heckklappe 4 verschließbar und wird durch Hochschwenken der Heckklappe 4 freigegeben. Zur Vergrößerung des Aufnahmevolumens des Laderaums 2 sind Sitzkissen und Rückenlehne des Rücksitzes 1 jeweils für sich schwenk- oder klappbar.

Der Laderaum 2 ist nach unten zum Wagenboden hin durch einen erfindungsgemäßen Ladeboden 5 begrenzt, der eine Transportvorrichtung 6 zum Be- und Entladen des Laderaumes 2 mit einem oder mehreren Ladegütern 7 umfasst. Mit diesem Ladeboden 5 können Ladegüter 7 mit hohem Gewicht mühelos manipuliert werden.

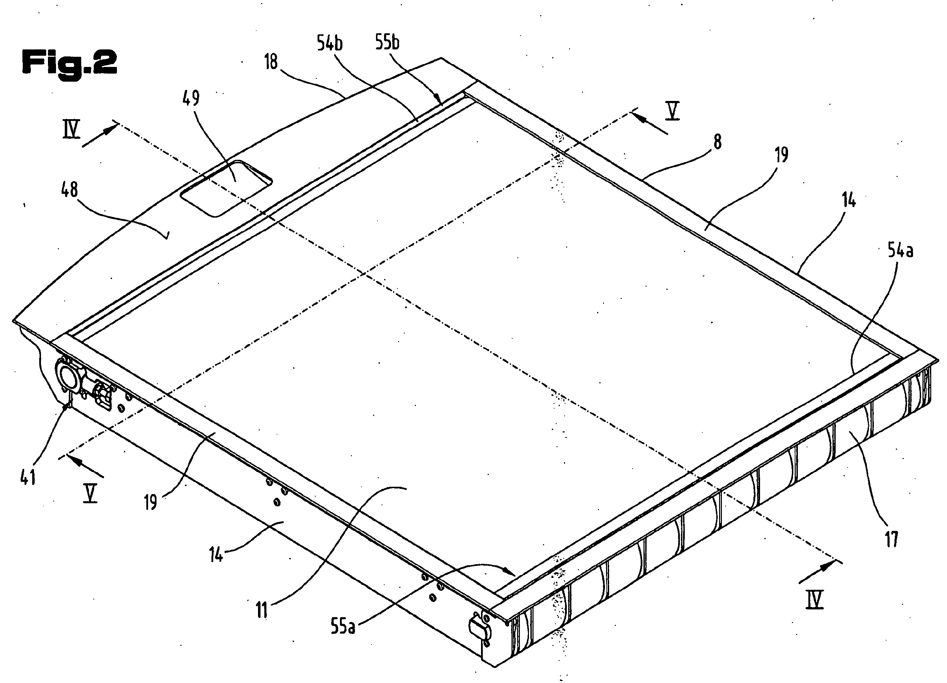

Diese Transportvorrichtung 6 ist in den Fig. 2 bis 13 in unterschiedlichen Ansichten gezeigt. Diese umfasst einen Rahmen 8, eine an diesem drehbar gelagerte Antriebsrolle 9 und Umlenkrolle 10, ein um die Antriebs- und Umlenkrolle 9, 10 geführtes, endlos umlaufendes Transportband 11, eine Stützauflage 12 sowie eine Abdeckung 13. Die Antriebsrolle 9 ist in dem in Fahrtrichtung betrachtet vorderen Ende der Transportvorrichtung 6 und die Umlenkrolle 10 in einem hinteren Ende der Transportvorrichtung 6 angeordnet.

Der Rahmen 8 weist in Wagenlängsrichtung parallele und auf Abstand gehaltene Längsträger 14 und diese miteinander verbindende Querträger 15, am vorderen und hinteren Ende der Transportvorrichtung 6 parallel zu einer Drehachse 16 der Antriebs- und Umlenkrolle 9, 10 ausgerichtete Abschlussträger 17, 18 sowie Überdeckungsprofile 19 auf. Die Längsträger 14, Querträger 15 und Überdeckungsprofile 19 sind beispielsweise durch ein Strangpressprofil aus Aluminium oder durch ein im Extrusionsverfahren hergestelltes Kunststoffprofil oder durch ein Blechprofil gebildet. Die Abschlussträger 17, 18 sind beispielsweise im Spritzgussverfahren aus Kunststoff hergestellt.

Die Antriebs- und Umlenkrolle 9, 10 weisen einen Zylindermantel und diesen beidseitig verschließende Stirnenden auf und sind je auf einer feststehenden Achse gehalten, deren an den Stirnenden axial überstehenden Achsabschnitte 20 in an den Längsträgern 14 im Bereich derer Enden vorgesehenen Achsaufnahmen 21 lagern. Die Achsaufnahmen 21 sind durch schlitzartige Aussparungen gebildet und ist die Außenkontur der Achsabschnitte 20 an die Kontur der Aussparungen angepasst, sodass die Achsen der Antriebs- und Umlenkrolle 9, 10 verdrehgesichert im Rahmen 8 gehalten sind.

Das motorisch angetriebene, endlose Transportband 11 bildet an seiner Innenseite eine Lauffläche und an seiner Außenseite im Obertrum 22 eine in Wagenlängsrichtung verschiebbare Ladefläche 23 zum Auflegen zumindest eines Ladegutes 7 aus. Die Ladefläche 23 definiert eine Transportebene der Transportvorrichtung 6 und erstreckt sich im Wesentlichen über die Laderaumbreite, wie aus Fig. 1 ersichtlich. Das sich zwischen der Antriebs- und Umlenkrolle 9, 10 erstreckende Obertrum 22 vom Transportband 11 liegt mit seiner Innenseite bzw. Lauffläche an der Stützauflage 12 gleitend auf, wonach die nach oben weisende und zwischen den Längsträgern 14 freiliegende Oberfläche eine Gleitfläche 24 ausbildet. Die Gleitfläche 24 ist an einer bevorzugt aus Kunststoff hergestellten Gleitschicht oder einer Lackschicht ausgebildet, mit der die Oberfläche überzogen ist. Durch die flächige Auflage bzw. Abstützung des Obertrums 22 auf der Gleitfläche 24 können Ladegüter 7 mit hohem Gewicht und kleiner Grundfläche problemlos manipuliert werden.

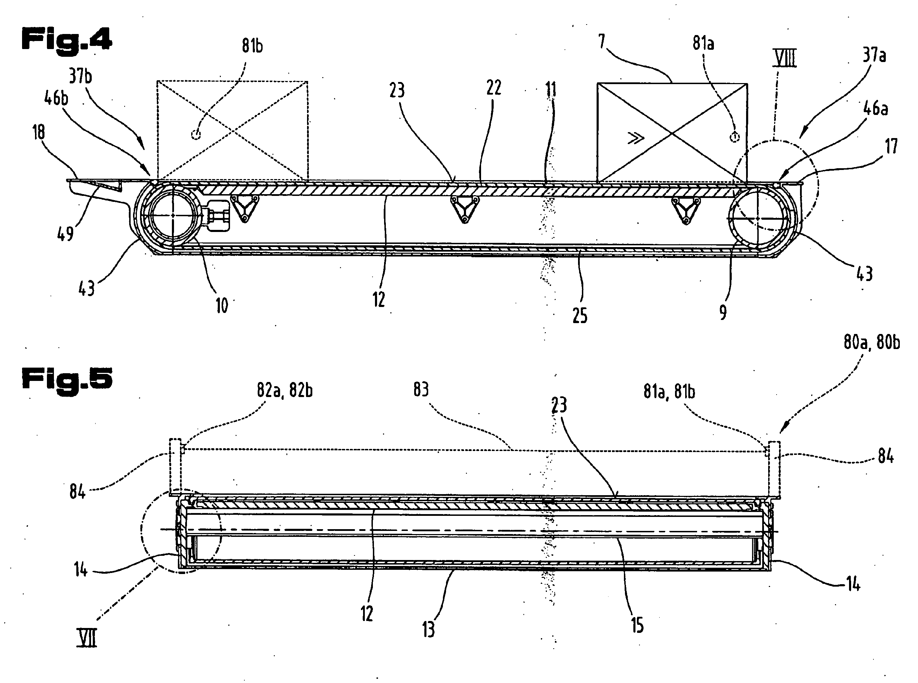

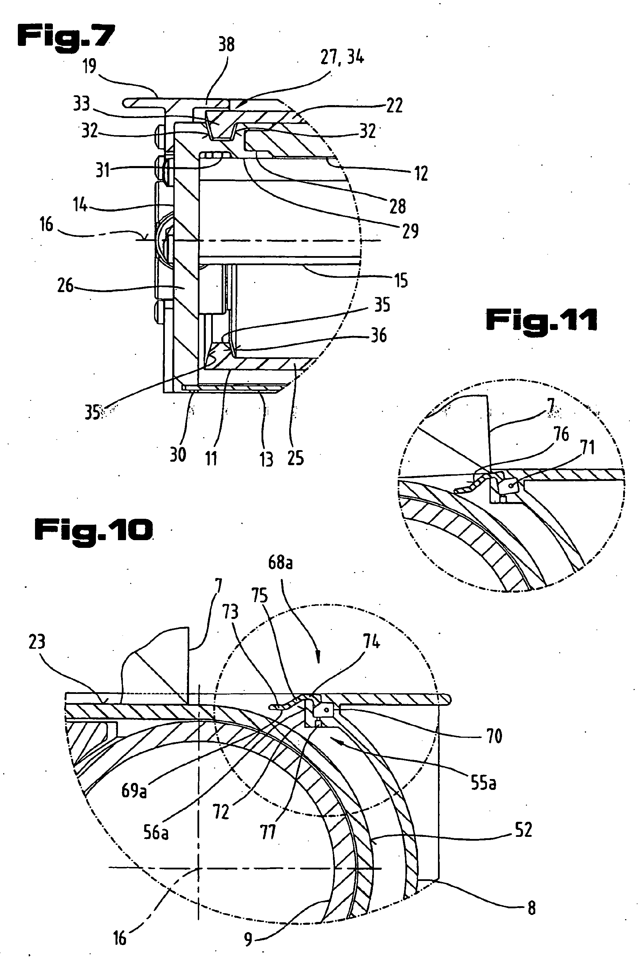

Die Stützauflage 12 ist von einer Tragplatte ausgebildet, die über eine in den Fig. 5 und 7 näher dargestellte Befestigungsvorrichtung zwischen dem Obertrum 22 und einem Untertrum 25 des Transportbandes 11 am Rahmen 8 gehalten ist.

In einer weiteren Ausführung kann die Stützauflage 12 ein Schallabsorptionsbauelement aus Holz, Holzwerkstoff, Kunststoff oder einem Verbundwerkstoff, insbesondere einer aus mehreren Schichten bestehenden Verbundplatte, aufweisen, welches als Plattenschwinger (Resonanzabsorber) oder Verbundplattenresonator und dgl. ausgebildet ist. Das Schallabsorptionsbauelement ist vorzugsweise als Feder-Masse-System aufgebaut, mit dem ein hoher Schallabsorptionsgrad erzielt wird.

Auch ist eine Schallabsorption durch poröse Stoffe, beispielsweise offenporige Schaumstoffe möglich, durch die Schallenergie in Wärmeenergie umgewandelt wird, verursacht durch Reibung der sich in den Poren bewegenden Luftteilchen. Die Stoffe sind natürlicher und organischer Herkunft.

An der Unterseite der Transportvorrichtung 6 ist die plattenförmige Abdeckung 13 vorgesehen, die über eine noch näher zu beschreibende Befestigungsvorrichtung am Rahmen 8 gehalten ist, wie ebenfalls aus den Fig. 5 und 7 ersichtlich.

Die in Umlaufrichtung des Transportbandes 11 verlaufenden Längsträger 14 weisen eine auf die Ladefläche 23 senkrecht ausgerichtete, aufragende Wand 26 und an deren aufeinander zugewandten Innenseiten zwischen einer Unter- und Oberkante der Längsträger 14 jeweils ein Führungselement 27 sowie die Befestigungsvorrichtungen für die Stützauflage 12 und die Abdeckung 13 auf. Die Befestigungsvorrichtungen für die Stützauflage 12 sind durch in einer zur Ladefläche 23 parallelen Ebene gegenüberliegende nutartige, insbesondere U-förmige Aufnahmeschlitze 28 gebildet, die von an den Innenseiten vorragenden Vorsprüngen 29 ausgeformt sind. Die Befestigungsvorrichtungen für die Abdeckung 13 sind durch in einer zur Ladefläche 23 parallelen Ebene gegenüberliegende nutartige Aufnahmeschlitze 30 gebildet, die unmittelbar an den Innenseiten im Längsträger 14 vertieft angeordnet sind. Die Tragplatte und die Abdeckung 13 sind in die Aufnahmeschlitze 28, 30 zwischen den Längsträgern 14 angeordnet und mit ihren Rändern von den Aufnahmeschlitzen 28, 30 formschlüssig getragen. Die plattenförmige Abdeckung 13 erstreckt sich zwischen den Längsträgern 14 und schließt mit den Abschlussträgern 17, 18 bündig ab, wie aus den Fig. 4 und 5 ersichtlich. Die Tragplatte erstreckt sich zwischen den Längsträgern 14 und annähernd über die gesamte Länge der Transportvorrichtung 6, wobei deren Stirnkanten nur mit geringen Abstand zur äußeren Umfangsfläche der Antriebs- und Umlenkrolle 9, 10 angeordnet sind, wie in Fig. 4 ersichtlich.

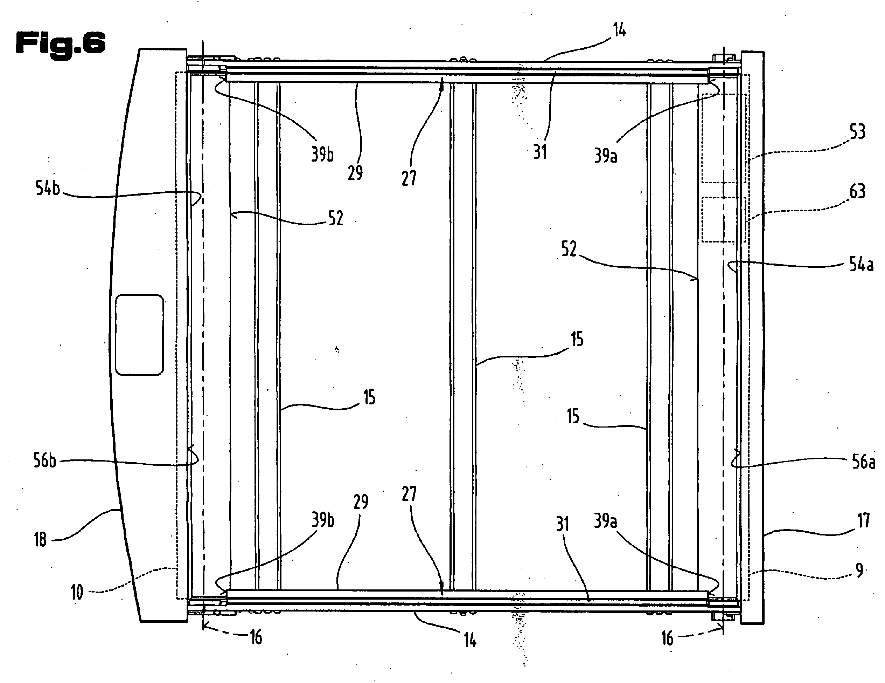

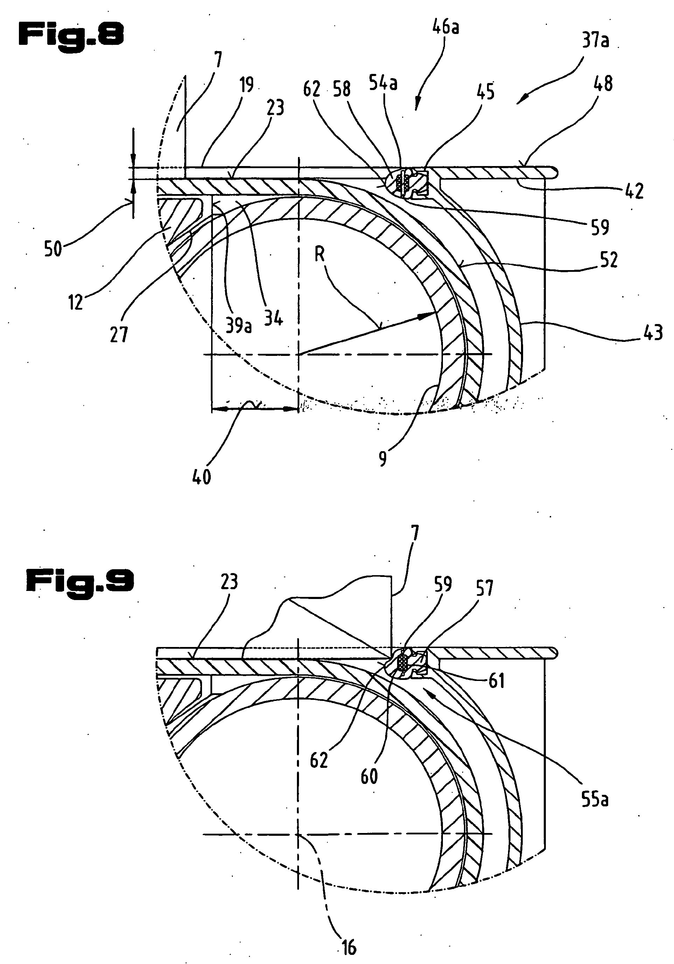

Wie aus Fig. 6 ersichtlich, sind die Führungselemente 27 der Längsträger 14 zu beiden Seiten der Antriebs- und Umlenkrolle 9, 10 bzw. Stützauflage 12 (Fig. 7) angeordnet und erstrecken sich diese jeweils in zur Umlaufrichtung des Transportbandes 11 paralleler Richtung zwischen der Antriebs- und Umlenkrolle 9, 10. Die Führungselemente 27 weisen jeweils eine Führungsschiene 31 mit winkelig zueinander ausgebildeten Führungsflächen 32 (siehe Fig. 7) auf. Die Führungsflächen 32 begrenzen eine Führungsnut, die im Vorsprung 29 obenseitig ausgeformt ist. Der zwischen den Führungsflächen 32 eingeschlossene Winkel beträgt zwischen 25° und 35°, beispielsweise 30°. Wie in Fig. 8 eingetragen, erstrecken sich die stirnseitigen Enden 39a, 39b jeder Führungsschiene 31 in den Umlenkbereichen 37a, 37b zumindest bis auf einen dem halben Außendurchmesser (Außenradius "R") der Antriebs- und Umlenkrolle 9, 10 entsprechenden Abstand 40, jedoch maximal bis zu den Drehachsen 16 der Antriebs- und Umlenkrolle 9, 10.

Wie in den Fig. 5 und 7 weiters ersichtlich, weist das endlose Transportband 11 einen gurtförmigen Tragteil mit rechteckigem Querschnitt und an dessen der Transportebene abgewandten Innenseite im Wesentlichen um die Länge der Antriebs- und Umlenkrolle 9, 10 voneinander distanzierte, profilartig nach unten erstreckende Führungsteile 33 mit trapezförmigem Querschnitt auf. Bevorzugt sind die Führungsteile 33 an der Innenseite entlang der Seitenränder des Transportbandes 11 angeordnet. Die Führungsteile 33 bilden Führungselemente 34 aus und weisen jeweils winkelig zueinander ausgebildete Führungsflächen 35 aus, die komplementär zu den winkeligen Führungsflächen 32 der gegenüberliegenden Führungsschienen 31 sind. Der zwischen den Führungsflächen 35 eingeschlossene Winkel beträgt zwischen 25° und 35°, beispielsweise 30°. Durch die gleitend miteinander in Eingriff stehenden Führungselemente 27, 34 wird eine ausgezeichnete seitliche Führung des Transportbandes 11 erreicht.

Wie nicht weiters dargestellt, ist es auch möglich, dass das endlose Transportband 11 mit ausschließlich einem Führungselement 34 versehen ist und an ausschließlich einem in der Symmetrieebene der Transportvorrichtung 6 liegenden Führungselement 27 geführt ist. Hierzu ist die Tragplatte mit der Führungsnut für das Führungselement 34 des Transportbandes 11 versehen.

Unter normaler Betriebsbelastung ist es ausreichend, wenn das Obertrum 22 des Transportbandes 11 in den Führungsschienen 31 vertikal und seitlich geführt wird, kann es sich aber als vorteilhaft erweisen, wenn auch das Untertrum 25 des Transportbandes 11 seitlich geführt wird. Dadurch wird eine noch bessere Laufruhe auf der Bewegung eines Ladegutes 7 zwischen einer Beladungsposition nahe der Beladungsöffnung 3 und einer Entladungsposition nahe dem Rücksitz 1 oder umgekehrt erreicht.

Die seitliche Führung des Transportbandes 11 im Untertrum 25 und/oder in Umlenkbereichen 37a, 37b zwischen dem Ober- und Untertrum 22, 25 kann durch die Antriebs- und/oder Umlenkrolle 9, 10 erfolgen, die ihrerseits an den Stirnenden mit in Richtung der an diesen vorragenden Achsabschnitte 20 konisch verjüngenden Führungsflächen 36 versehen sind. Diese sind beispielsweise von in den Zylindermantel endseitig eingesteckten Kappen (nicht dargestellt) ausgebildet. Die Führungsflächen 36 sind komplementär zu jenen der Antriebs- und/ oder Umlenkrolle 9, 10 benachbarten Führungsflächen 32 ausgebildet. Die Führungselemente 34 hintergreifen die Stirnenden der Antriebs- und Umlenkrolle 9, 10. Die der Antriebs- und Umlenkrolle 9, 10 jeweils benachbarte Führungsfläche 32 verläuft tangential zur kegelstumpfförmigen Führungsfläche 36 und entspricht der zwischen einer Vertikalen und der Führungsfläche 32 eingeschlossene Neigungswinkel dem zwischen einer Vertikalen und der Führungsfläche 36 eingeschlossenen Neigungswinkel. Dadurch werden in den Umlenkbereichen 37a, 37b die Führungsteile 33 des Transportbandes 11 verwindungsfrei in die einlaufseitigen Enden der Führungsschienen 31 überführt.

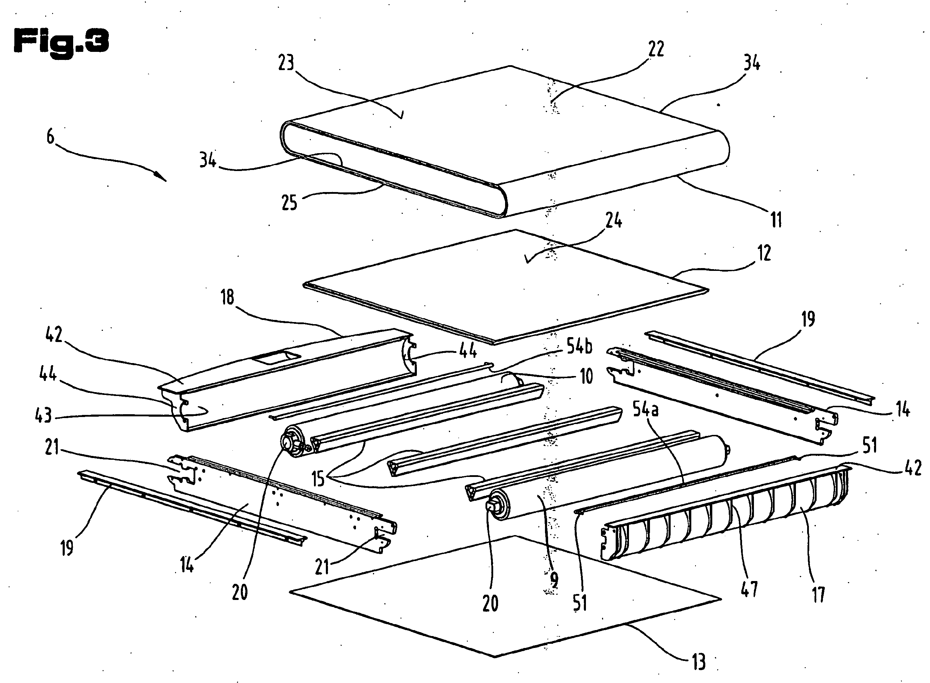

Wie in den Fig. 2 und 3 weiters ersichtlich, ist die Umlenkrolle 13 als Spannrolle ausgebildet und über deren Achse an einer Spanneinrichtung 41 verschiebbar gegenüber die Längsträger 14 in der Achsaufnahme 21 gelagert. Durch diese Spanneinrichtung 41 wird die Umlenkrolle 10 derart mit einer von der Antriebsrolle 9 weggerichteten Spannkraft beaufschlagt, dass zumindest das Obertrum 22 des Transportbandes 11 mit seiner Innenseite an der Gleitfläche 24 plan aufliegt und Längentoleranzen kompensiert werden. Derartige Spanneinrichtungen 41 können selbstnachstellend oder aber auch im Rahmen von Wartungsarbeiten manuell nachgestellt werden. Derartige Spanneinrichtungen 41 sind dem Fachmann bestens bekannt.

Wie den Fig. 5 und 7 zu entnehmen, sind an den Längsträgern 14 obenseitig die im Querschnitt etwa T-förmige Überdeckungsprofile 19 derart befestigt, dass die aufeinander zulaufenden horizontalen Schenkeln 38 die Längsränder des Transportbandes 11 übergreifen und mit geringem Spiel oberhalb der Transportebene liegen.

Die Abschlussträger 17, 18 sind am vorderen und hinteren Ende der Transportvorrichtung 6 über Verbindungselemente, beispielsweise Schrauben mit den Längsträgern 14 lösbar verbunden und weisen jeweils einen in zur Ladefläche 23 parallelen Ebene liegenden Deckenabschnitt 42 und einen an diesem anschließenden, konkav verlaufenden Stirnabschnitt 43 sowie an in Richtung der Drehachse 16 gegenüberliegenden Enden Anschlussflansche 44 auf. Der Abschlussträger 17, 18 erstreckt sich über die gesamte Breite der Transportvorrichtung 6 und ist endseitig durch die Anschlussflansche 44 begrenzt. Der Krümmungsradius des konkaven Stirnabschnittes 43 ist um einen Radialspalt größer als der Außenradius "R" der Antriebs- und Umlenkrolle 9, 10. Im Übergangsbereich zwischen Decken- und Stirnabschnitt 42, 43 erstreckt sich ebenfalls über die gesamte Breite der Transportvorrichtung 6 eine bevorzugt hinterschnittene Befestigungsnut 45 für einen noch näher zu beschreibenden Sensor 46a, 46b, wie in Fig. 8 bzw. 4 ersichtlich. Über die Sensoren 46a, 46b wird die Anwesenheit eines Ladegutes 7 entweder in der Beladungs- oder Endladungsposition erfasst und von einer Auswerteeinheit ausgewertet.

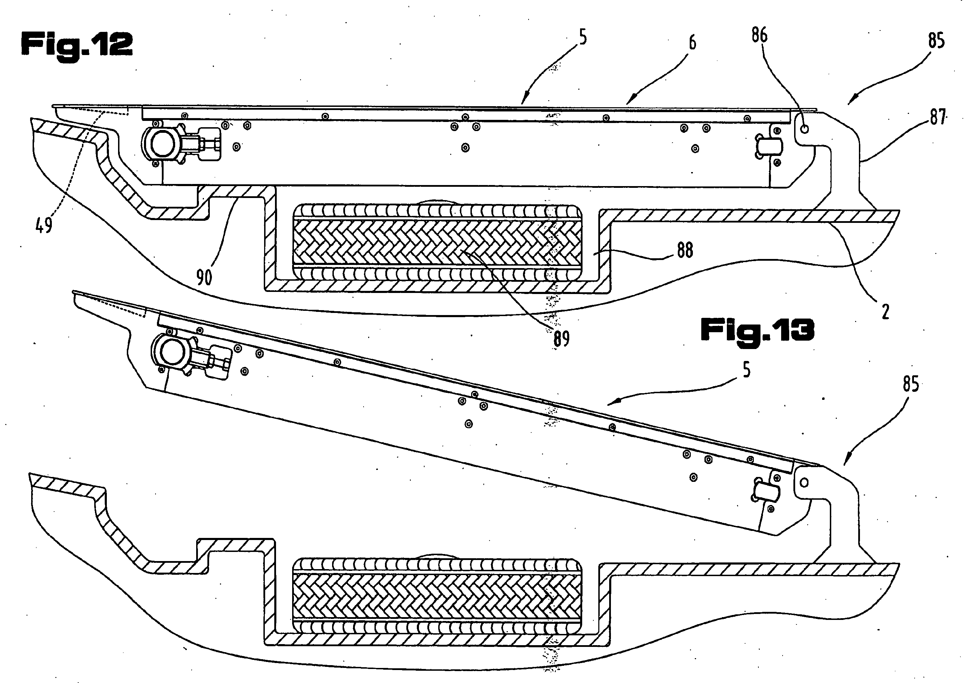

An der Außenseite der Abschlussträger 17, 18 sind in dessen Längsrichtung mit Abstand voneinander und sich zwischen dem Decken- und Stirnabschnitt 42, 43 erstreckende Versteifungsrippen 47 angeordnet. Diese verleihen dem Abschlussträger 17, 18 eine hohe Torsionsund Biegesteifigkeit, sodass gegebenenfalls beim Be- und Endladen eines Ladegutes 7 in den bzw. aus dem Laderaum 2 auf einer Oberseite 48 am Deckenabschnitt 42 ein Ladegut 7 auch mit höherem Gewicht abgesetzt werden kann. Demnach kann der Deckenabschnitt 42 des der Beladungsöffnung 3 (siehe Fig. 1) benachbarten, hinteren Abschlussträger 18 an der Oberseite 48 eine Aufsetzfläche ausbilden, welche parallel zur Ladefläche 23 verläuft. Wie auch aus den Fig. ersichtlich, ist der hintere Abschlussträger 18 am Deckenabschnitt 42 mit einer mit in diesem vertieft angeordneten Griffmulde 49 versehen, mittels derer eine handergonomische und komfortable Verstellung der Transportvorrichtung 6 zwischen einer zugeklappten Schließstellung, wie in Fig. 12 dargestellt, und einer aufgeklappten Öffnungsstellung, wie in Fig. 13 dargestellt, möglich ist.

Wie in Fig. 8 eingetragen, ist die Oberseite 48 bzw. Absetzfläche des hinteren Abschlussträgers 18 mit Abstand 50 zur Ladefläche 23 in Höhenrichtung versetzt angeordnet, welcher ein zuverlässiges Auflaufen des entweder in die Beladungsposition oder Entladungsposition bewegten Ladegutes 7 ermöglicht. Der Abstand 50 beträgt bevorzugt 4 bis 6 mm.

Wie aus der Zusammenschau der Fig. 4 und 6 ersichtlich, sind in den Umlenkbereichen 37a, 37b des Transportbandes 11 jeweils ein Sensor 46a, 46b angeordnet, über welche ein mit der Antriebsrolle 9 gekoppelter, reversierbarer Antriebsmotor, insbesondere ein in Fig. 6 schematisch eingetragener Elektromotor 53, insbesondere ein bürsteloser Gleichstrom-Motor, ansteuerbar ist. Der Elektromotor 53 wirkt auf eine mit dem Transportband 11 reibschlüssig verbundene Antriebsrolle 9 ein und treibt die Antriebsrolle 9 wahlweise im Uhrzeigersinn oder Gegenuhrzeigersinn an. Der Elektromotor 53 ist mit einer nicht dargestellten Steuereinheit verbunden, die eine Regelung aufweist und durch die unterschiedliche Steuerfunktionen erfüllt werden können. Beispielsweise erfolgt durch Auswertung des Motorstroms eine Überlastabschaltung oder Abschaltung des Elektromotor 53 bei blockiertem Ladegut 7 oder wenn vom Ladegut 7 die Entladungs- oder Beladungsposition nicht erreicht wird. Durch den geregelten Elektromotor 53 können auch Geschwindigkeitsrampen gefahren werden, mit dem Vorteil, dass beispielsweise kurz vor Erreichen der Entladungs- oder Beladungsposition die Umlaufgeschwindigkeit des Transportbandes 11 geregelt minimiert wird, um die Aufprallenergie zu reduzieren, wenn das Ladegut 7 gegen die Schaltleiste 46a, 46b; 69a oder eine Vorderoder Hinterkante 56a, 56b am Rahmen 8 auffährt.

Im gezeigten Ausführungsbeispiel weisen die Sensoren 46a, 46b eine aus der Transportebene herausragende Schaltleiste 54a, 54b auf, welche im Spaltbereich 55a, 55b zwischen der Außenseite 52 bzw. der äußeren Umfangsfläche des Transportbandes 11 und einer parallel zur Drehachse 16 am Abschlussträger 17, 18 ausgebildeten Vorder- und Hinterkante 56a, 56b (siehe Fig. 6) angeordnet ist.

Die Schaltleisten 54a, 54b erstrecken sich jeweils parallel zur Drehachse 16 zwischen den Längsträgern 14 über die gesamte Breite des Transportbandes 11 und sind endseitig über Steckstifte 51 und/oder zwischen diesen über ein Befestigungselement 57, insbesondere ein die Befestigungsnut 45 hintergreifendes Formschlusselement oder elastisch verformbares Rast- bzw. Schnappelement und dgl., am Rahmen 8, insbesondere am Abschlussträger 17, 18 auswechselbar montiert. Die Steckstifte 51 sind von einer Bohrung durchsetzt, durch welche Stromleitungen der noch näher zu beschreibenden Schaltleisten 46a, 46b hindurch geführt werden.

Die Schaltleisten 54a, 54b umfassen einen Schaltkörper 58 mit einer in diesem integrierten Schaltkammer 59 und durch diese voneinander getrennte elektrisch leitfähige Kontaktbereiche 60, 61 sowie eine dem Transportband 11 zugewandte und in den Spaltbereich 55a, 55b vorspringende, elastisch verformbare Schaltfläche 62. Dabei ist von Vorteil, dass der aus elastisch verformbaren Kunststoff, insbesondere thermoplastischen Elastomer, hergestellte Schaltkörper 58 zugleich ein Dämpfungsorgan für das Absorbieren der Aufprallenergie bildet, wenn ein Ladegut 7 gegen die Schaltfläche 62 auffährt. Dabei wird die Aufprallenergie in Verformungsenergie umgewandelt.

Die Schaltfläche 62 ist der Antriebs- und Umlenkrolle 9, 10 zugewandt, konvex und vom elastischen verformbaren, reversiblen Schaltkörper 58 ausgebildet. Wie nicht weiters dargestellt, sind die Kontaktbereiche 60, 61 über Stromleitungen mit einer Stromquelle verbunden. Schon bei geringem Druck auf die Schaltleiste 54a, 54b durch ein gegen diese anstoßendes Ladegut 7 wird die Schaltfläche 62 sowie Schaltkammer 59 elastisch verformt und dabei die Kontaktbereiche 60, 61 gegeneinander angelegt und ein elektrischen Schaltsignal an eine Auswerteeinheit (nicht dargestellt) übermittelt, die ihrerseits den Elektromotor 53 mit einem elektrischen Steuersignal beaufschlagt und die Antriebsrolle 9 ansteuert. Erreicht das Ladegut 7 eine Beladungsposition, wie in der Fig. 9 eingetragen, oder eine Endladeposition, wie in Fig. 4 in strichlierte Linien eingetragen, wird die Schaltleiste 54a; 54b durch elastische Verformung der Schaltfläche 62 betätigt, ein Steuersignal von der Auswerteeinheit erzeugt und der Elektromotor 53 derart angesteuert, dass das Transportband 11 in seiner Umlaufbewegung und das auf dem Transportband 11 abgelegte Ladegut 7 in seiner Fortbewegung angehalten wird. Die Schaltleiste 46a, 46b ist von der Betätigungsstellung gemäß Fig. 9, in welcher der Schaltkörper 58 verformt ist, in die Ruhestellung gemäß Fig. 8, in welcher der Schaltkörper 58 unverformt ist, selbsttätig rückstellbar, wenn das Ladegut 7 wieder von der Schaltleiste 46a, 46b wegbewegt wird.

Bevorzugt wird mit der Betätigung der Schaltleiste 54a, 54b durch das auf diese auffahrende Ladgut 7 und Erreichen entweder der Beladungsposition oder Endladungsposition eine in Fig. 6 in strichlierte Linien schematisch angedeutete Bremseinrichtung 63 betätigt, um ein Blockieren des Transportbandes 11 zu erreichen. Die Bremseinrichtung 63 weist eine elektromechanische oder elektromagnetische Bremse auf, die von der Auswerte- oder Steuereinheit durch ein entsprechendes, elektrisches Bremssignal angesteuert wird. Die Auswerteeinheit ist mit der Steuereinheit verbunden.

In einer bevorzugten Ausführung sind sowohl der Elektromotor 53 als auch die Bremseinrichtung 63 innerhalb der Antriebsrolle 9 integriert und koaxial zur Drehachse 16 angeordnet, wie in Fig. 6 in strichlierte Linien schematisch andeutet.

Die Bremseinrichtung 63 verharrt so lange in ihrer eingerückten Bremsstellung und die Antriebsrolle 9 arretiert, bis an einer in Fig. 1 eingetragenen Bedieneinheit 64 ein Vor-Schalter 65 für die Bewegung des Ladegutes 7 vom hinterem Ende der Transportvorrichtung 6 in Richtung auf das vordere Ende der Transportvorrichtung 6 (Beladungsposition) oder ein Zurück-Schalter 66 für die Bewegung des Ladegutes 7 vom vorderen Ende der Transportvorrichtung 6 in Richtung auf das hintere Ende der Transportvorrichtung 6 (Endladungsposition) von einem nicht dargestellten Bediener betätigt wird. Das Transportband 11 kann über die Bedieneinheit 64 wahlweise in Beladungsrichtung - gemäß Pfeil 91 - oder in Entladungsrichtung - gemäß Pfeil 92 - angetrieben werden. Mit der Betätigung des Vor-Schalters 65 oder Zurück-Schalters 66 wird die Bremseinrichtung 63 in eine ausgerückte Grundstellung verstellt. Die Bedieneinheit 64 ist am Radkasten des Fahrzeuges angeordnet und für den Bediener gut zugänglich.

Vorteilhafterweise ist die Bremseinrichtung 63 im unbetätigten Schaltzustand stets in ihrer eingerückten Bremsstellung und wird diese erst mit der Betätigung des Vor-Schalters 65 oder Zurück-Schalters 66 in ihre ausgerückte Grundstellung bewegt, in welcher das Transportband 11 angetrieben wird. Dadurch wird eine unerwünschte Verlagerung des Ladegutes 7, wenn sich dieses in der Beladungsposition oder Endladungsposition befindet, zuverlässig vermieden. Das Bremsmoment ist so ausgelegt, dass sowohl bei positiver als auch negativer Beschleunigung, insbesondere bei starken Bremsmanövern, eine ungewollte Verschiebung der Ladefläche 23 und Verlagerung des Ladegutes 7 entgegen der Beschleunigungskraft vermieden wird.

Um eine Relativbewegung zwischen Ladegut 7 und Ladefläche 23 auch bei hoher negativer oder positiver Beschleunigung zu vermeiden, ist das Transportband 11 an seiner dem Ladegut 7 zugewandten Außenseite mit einem hohen Haftreibungskoeffizient ausgebildet bzw. weist eine hohe Oberflächenrauheit, insbesondere eine Profilierung auf. Dadurch wird ein sicherer Halt für ein am Transportband 11 aufliegendes Ladegut 7 gewährleistet. Beispielsweise ist die Außenseite 52 des Transportbandes 11 mit einem nicht dargestellten Teppich versehen, der in Farbe und Qualität an die übrige Ausstattung des Fahrzeuginnenraumes angepasst ist.

Hingegen ist die Haftreibung der Innenseite des Transportbandes 11 zur Antriebs- und Umlenkrolle 9, 10, verglichen zur Haftreibung der Oberseite 52 des Transportbandes 11 zum Ladegut 7 geringer, sodass das das Ladegut 7 mitschleppende Transportband 11 reibungsarm über die Gleitfläche 24 gleiten kann. Das Transportband 11 wird im Wesentlichen schlupffrei von der Antriebsrolle 9 angetrieben.

In der Fig. 10 ist eine Ausschnittsvergrößerung von einem Ende der Transportvorrichtung 6 mit einer anderen Ausführung des Sensors 68a schematisch dargestellt. Der Sensor 68a, 68b ist wiederum durch eine sich über die Breite des Transportbandes 11 erstreckende Schaltleiste 69a gebildet, welche im Gegensatz zu der Ausführung nach den vorhergehenden Fig. über, bevorzugt an den in Richtung der Drehachse 16 gegenüberliegenden Enden angeordnete schwenkbare Lagerteile 70 an parallel zur Drehachse 16 ausgerichteten Achszapfen 71 schwenkbar am Rahmen 8 gelagert ist. Die Achszapfen 71 sind jeweils von einem Achskörper 72 ausgebildet, der im Bereich des Anschlussflansche 44 der Abschlussträger 17, 18 angeformt sind. Die Schaltleiste 69a verbindet die Schwenkteile 70 und ist durch einen Winkelprofil gebildet, welches einen, in der unbetätigten Ruhestellung in oder geringfügig unterhalb der Förderfläche 23 liegenden und parallel zu dieser verlaufenden Aufnahmeprofilabschnitt 73, einen zu diesen bevorzugt parallel angeordneten Stützprofilabschnitt 74 sowie einen diese verbindenden Schaltprofilabschnitt 75 umfasst.

Der Schaltprofilabschnitt 75 der Schaltleiste 69a weist eine in Umlaufrichtung des Transportbandes 11 geneigte Schaltfläche 76 auf, welche in den Spaltbereich 55a, 55b zwischen Vorderkante 56a und Hinterkante 56b der Abschlussträger 17, 18 und der Außenseite 52 des Transportbandes 11 vorspringt bzw. ragt diese in eine durch die Vorder- und Hinterkante 56a, 56b des Rahmens 8 begrenzte Bewegungsbahn des Ladegutes 7 vor. Die Förderfläche 23 und Schaltfläche 76 schließen einen Winkel zwischen 110° und 160 ° ein.

Die Schaltleiste 69a ist zwischen der in Fig. 10 eingetragenen Ruhestellung und der in Fig. 11 eingetragenen Betätigungsstellung verstellbar. In der ausgelenkten Betätigungsstellung wird über die Schaltleiste 69a insbesondere dem Schwenkteil 70, ein Schalter 77 betätigt und von diesem ein elektrisches Schaltsignal an die Auswerteeinheit übermittelt, die ihrerseits wiederum den Elektromotor 53 der Antriebsrolle 9 ansteuert und das Ladegut 7 auf seiner Förderbewegung exakt an der Beladungsposition oder Endladungsposition sanft anhält.

Der der Betätigungsstellung zugeordnete, elektrische Schalter 77 ist am Rahmen 8 oder in diesem integriert angeordnet und mit der Auswerte- oder Steuereinheit verbunden. Mit Erreichen der Beladungsposition oder Endladungsposition wird bereits bei geringem Druck auf die Schaltleiste 69a durch ein gegen diese anstoßendes Ladegut 7, die Schaltleiste 69a in die Betätigungsstellung nach unten ausgelenkt und, wie bereits oben beschrieben, die Bremseinrichtung 63 betätigt und die Antriebsrolle 9 arretiert. Das Ladegut 7 ist am Stützprofilabschnitt 74 abgestützt und fährt gegen die Vorder- oder Hinterkante 56a, 56b sanft auf, wenn das Ladegut 7 die Beladungs- oder Entladungsposition erreicht. Die Vorder- oder Hinterkante 56a, 56b bilden Anschläge aus, welche die Ladefläche in Umlaufrichtung des Transportbandes 11 begrenzen und/oder umfassen die vom Sensor 68a getrennt angeordneten Dämpfungsorgane für das Absorbieren der Aufprallenergie, wenn ein Ladegut 7 gegen ein Dämpfungsorgan auffährt. Die Dämpfungsorgane können beispielsweise durch einen Puffer aus elastisch nachgiebigen, reversiblen Kunststoff, wie beispielsweise elastomeren Kunststoff, oder Gummi und dgl. oder einen mit komprimierbaren Medium, wie Luft, Gas, Öl und dgl., befüllten Stoßdämpfer oder einen mit Hydrauliköl befüllten Industrie-Stoßdämpfer (Hydraulikdämpfer) gebildet sein.

Die Schwenkbarkeit der Schaltleiste 69a stellt nur eine von vielen Möglichkeiten der Relativverstellung der Schaltleiste 69a gegenüber dem Rahmen 8 dar. Wesentlich ist, dass die Schaltleiste 69a nach dieser Ausführung zwischen der unbetätigten Ruhestellung und der Betätigungsstellung verstellbar ist, um ein Schaltsignal zu erzeugen bzw. die Anwesenheit eines Ladegutes 7 in oben beschriebener Weise erkennen zu können.

Eine andere Anordnung von Sensoren 80a, 80b ist zusätzlich in strichlierte Linien in den Fig. 4 und 5 eingetragen, die nahe dem oder im jeweiligen Spaltbereich 55a, 55b am Rahmen 8 oder im Laderaum 2 an der Karosserie des Fahrzeuges befestigt sind. Die Sensoren 80a, 80b können die im Spaltbereich 55a, 55b angeordneten Sensoren 46a, 46b; 68a ersetzen oder zusätzlich zu diesen Sensoren 46a, 46b; 68a vorgesehen werden oder werden die Sensoren 46a, 46b im Spaltbereich 55a, 55b durch die Sensoren 80a, 80b ersetzt. Die Sensoren 80a, 80b sind durch eine opto-elektronische Sensoranordnung, insbesondere Laser- oder Infrarot-Sensoranordnung, gebildet und mit der Steuereinheit verbunden. Die Sensoranordnungen weisen jeweils einen Lichtsensor 81a, 81b und einen diesem quer zur Längserstreckung der Transportvorrichtung 6 gegenüberliegenden Reflektor 82a, 82b auf, der einen vom Lichtsensor 81 a, 81 b quer über die Transportvorrichtung 6 gerichteten Taststrahl 83 zurückgestrahlt, wenn sich kein Ladegut 7 in der Beladungs- oder Entladungsposition befindet. Wird hingegen der Taststrahl 83 unterbrochen und nicht auf den Lichtsensor 81a, 81b zurückgestrahlt, befindet sich ein Ladegut 7 entweder in der Beladungs- oder Entladungsposition. Der Lichtsensor 81 a, 81 b übermittelt sodann ein elektrisches Schaltsignal an die Auswerteeinheit, die ihrerseits die Auswertung vornimmt und den Elektromotor 53 und die Bremseinrichtung 63 der Antriebsrolle 9 ansteuert. Der Lichtsensor 81 a, 81 b tastet ein entlang der Bewegungsbahn transportiertes Ladegut 7 ab und erfasst die Anwesenheit eines Ladegutes 7 entweder in der Beladungs- oder Endladungsposition.

Wie in Fig. 5 in strichlierte Linien eingetragen, sind die Lichtsensoren 81 a, 81 b jeweils über einen Montagehalter 84 mit dem Rahmen 8 verbunden und seitlich zur Bewegungsbahn des Ladegutes 7 oberhalb der Transportebene im Umlenkbereich 37a, 37b angeordnet. Die die Bewegungsbahn des Ladegutes 7 in Umlaufrichtung begrenzende Vorder- und Hinterkanten 56a, 56b (Fig. 6) am Rahmen 8 bilden stationäre mechanische Anschläge aus, die mit Dämpfungsorganen versehen werden können. Die Sensoren 80a, 80b sind in Umlaufrichtung des Transportbandes 11 derart angeordnet sind, dass nach dem Abschalten des Elektromotors 53 alleine aufgrund der Massenträgheit des Ladegutes 7 dieses gegen die Vorder- oder Hinterkante 56a, 56b entweder in die Entladungs- oder Beladungsposition bewegt wird. Natürlich können die Sensoren 80a, 80b genauso gut im Rahmen 8, insbesondere den Längsträgern 14 oder Abschlussträgern 17 integriert angeordnet werden. Der Elektromotor 53 kann, wie oben beschrieben, nach einem Geschwindigkeitsprofil gesteuert werden, derart, dass das Ladegut 7 sanft gegen die Vorder- oder Hinterkante 56a, 56b auffährt.

In den gemeinsam beschriebenen Fig. 12 und 13 ist ein Ausschnitt des Laderaumes 2 und der zwischen einer abgeschwenkten Schließstellung, wie in Fig. 12 dargestellt, und einer hochgeschwenkten Öffnungsstellung, wie in Fig. 13 dargestellt, verstellbare Ladeboden 5 gezeigt. Der Ladeboden 5, insbesondere die Transportvorrichtung 6, ist an seinem vorderen Ende über einen Lagerteil 85 gelenkig mit dem Wagenboden verbunden. Der Lagerteil 85 weist am vorderen Ende der Transportvorrichtung 6 am Rahmen 8 in entgegen gesetzte Richtungen seitlich vorragende und parallel zur Drehachse 16 der Antriebs- und Umlenkrolle 9, 10 ausgerichtete zapfenartige Lagerachsen 86 auf, die in zu beiden Seiten der Transportvorrichtung 6 angeordnete Lagerblöcken 87 drehbar gehalten sind. Der Laderaum 2 umfasst eine aus der Ebene des Wagenbodens nach unten ausgeformte Mulde 88, in der ein Reserverad 89, Werkzeug, beispielsweise ein Wagenheber, Schraubenschlüssel und dgl., oder Zubehörteile und dgl., aufbewahrt werden. In einer zur Mulde 88 entgegen gesetzter Richtung ist aus der Ebene des Wagenbodens nach oben ein Widerlager 90 ausgeformt, an dem die Transportvorrichtung 6 über den Rahmen 8 abgestützt ist, wenn die Transportvorrichtung 6 in ihre Schließstellung hinabgeschwenkt ist. Der Ladeboden 5 ist unmittelbar oberhalb der Mulde 88 angeordnet.

Wie nicht weiters dargestellt, ist in der Griffmulde 49 ein Betätigungsgriff angeordnet, über den eine Vorrichtung zur Verriegelung und Entriegelung des Ladebodens 5 bzw. der Transportvorrichtung 6 in hinabgeschwenkter Schließstellung möglich ist. Außerdem kann zur Unterstützung der Muskelkraft beim Hochschwenken des Ladebodens 5 zumindest ein nicht dargestellter Stellantrieb vorgesehen werden, der beispielsweise durch eine Gasdruckfeder gebildet ist, die seitlich mit dem Rahmen 8 und dem Wagenboden gelenkig verbunden ist.

Eine andere, nicht gezeigte Ausführung besteht darin, dass der Ladeboden 5 in einer zur Ladefläche 23 bzw. Transportebene parallel verlaufenden Ebene verschiebbar in einem im Laderaum 2 ortsfesten Lagerteil gelagert ist. Der Lagerteil ist nach dieser Ausführung durch zu beiden Längsseiten des Ladebodens 5 bzw. Rahmens 8 angeordnete, etwa U-förmige Längsschienen gebildet, welche den Ladeboden 5 am Rahmen 8 seitlich übergreifen und diesen verschiebbar lagern. Die Längsschienen erstrecken sich in Wagenlängsrichtung, ausgehend von der Beladungsöffnung 3 bis unter das Sitzgestell des Rücksitzes 1. Der Ladeboden 5 kann zwischen der die Mulde 88 freigebenden Öffnungsstellung und der die Mulde 88 abdeckenden Schließstellung verschoben werden, sodass in der Öffnungsstellung aus der Mulde 88 beispielsweise das Reserverad 89 problemlos herausgenommen werden kann.

Soll nun ein Ladegut 7, beispielsweise eine Getränkekiste, im Laderaum 2 abgestellt werden, wird dieses vom Bediener auf der Ladefläche 23 abgesetzt. Durch Betätigung des Vor-Schalters 65 wird das Transportband 11 in Beladungsrichtung - gemäß Pfeil 91 - verstellt und dabei das Ladegut 7 in Richtung auf die Beladungsposition nahe dem Rücksitz 1 bewegt, bis dieses vom Sensor 46a; 69a; 80a detektiert wird. Nach der Betätigung des Vor-Schalters 65 wird das Transportband 11 durch die Antriebsrolle 9 in Umlauf versetzt und so lange angetrieben, bis es vom Sensor 46a; 69a; 80a detektiert wurde. Mit dem Erkennen der Anwesenheit eines Ladegutes 7 in der Beladungsposition wird vom Sensor 46a; 69a; 80a ein elektrisches Schaltsignal an die Auswerteeinheit übermittelt, die ihrerseits den Elektromotor 53 und/ oder Bremseinrichtung 63 ansteuert und damit die Antriebsrolle 9 stillsetzt und das Ladegut 7 in seiner Bewegung in der Beladungsposition angehalten wird. In der Beladungsposition ist das Ladegut 7 gegen den Sensor 46a oder gegen die Vorderkante 56a am Rahmen 8 abgestützt und gesichert gehalten.

Soll nun das Ladegut 7 vom Laderaum 2 entnommen werden, wird der Zurück-Schalter 66 betätigt, wodurch die Bremseinrichtung 63 und der Elektromotor 53 jeweils ein Steuersignal von der Steuereinheit erhalten und die Bremseinrichtung 63 in ihre Grundstellung verstellt und die Antriebsrolle 9 im Reversierbetrieb angetrieben und das Transportband 11 in Entladungsrichtung - gemäß Pfeil 92 - verstellt und dabei das Ladegut 7 in Richtung auf die Entladungsposition bewegt wird, so lange bis dieses vom Sensor 46b; 80b detektiert wird. Mit Erfassen der Anwesenheit des Ladegutes 7 in der Entladungsposition erhält der Elektromotor 53 und/oder die Bremseinrichtung 63 ein durch den Sensor 46b; 80b ausgelöstes Steuersignal, mit welchem der Elektromotor 53 stillgesetzt, die Bremseinrichtung 63 in ihre Bremsstellung verstellt und das Ladegut 7 auf seiner Bewegung in der Entladungsposition angehalten wird.

Mit dem Schaltsignal des Sensors 46a, 46b; 69a, 80a, 80b nach Erkennen der Anwesenheit eines Ladegutes 7 entweder in der Beladungs- oder Entladungsposition wird die Bremseinrichtung 63 durch die Steuereinheit über ein Bremssignal angesteuert und die Antriebsrolle 9 arretiert, sodass das Ladegut 7 zuverlässig in der gegen den Sensor 46a, 46b; 69a, 80a, 80b oder die Vorder- oder Hinterkante 56a, 56b des Rahmens 8 angestellten Position zuverlässig gehalten wird, selbst wenn das Fahrzeug beschleunigt oder abbremst. Mittels der Sensoren 46a, 46b; 69a, 80a, 80b wird ein kontrolliertes Anhalten des Ladegutes 7 relativ zum Ladeboden 5 bzw. Laderaum 2 ermöglicht.

Der Ladeboden 5 bildet in einer bevorzugten Ausführung eine komplett vormontierbare und modular aufgebaute Baueinheit, die sich schnell und leicht in das Fahrzeug einbauen lässt und darüber hinaus eine sehr geringe Bauhöhe aufweist. Dadurch kann der Ladeboden 5 auch auf der Rückseite einer Rückenlehne des Rücksitzes 1 angeordnet werden, die zur Laderaumvergrößerung nach vorn umklappbar ist. Die Baueinheit kann insgesamt kostengünstig gefertigt und vormontiert werden.

Die Erfindung findet mit Vorteil auch Anwendung in Laderäumen 2 von Omnibussen, um auch hier den Zugang zu den unterhalb des Fahrgastraumes angeordneten Laderäumen 2, die sich über die gesamte Breite des Omnibusses erstrecken und von einer Längsseite des Omnibusses aus zugänglich sind, zu erleichtern.

Der Ordnung halber sei abschließend darauf hingewiesen, dass zum besseren Verständnis des Aufbaus des Ladebodens 5 dieser bzw. dessen Bestandteile teilweise unmaßstäblich und/oder vergrößert und/oder verkleinert dargestellt wurden.

Vor allem können die einzelnen in den Fig. 1 bis 9; 10, 11; 12, 13 gezeigten Ausführungen den Gegenstand von eigenständigen, erfindungsgemäßen Lösungen bilden und beliebig miteinander kombiniert werden.

### Bezugszeichenaufstellung

| | | | |
|---|---|---|---|
| 1 | Rücksitz | 36 | Führungsfläche |
| 2 | Laderaum | 37a | Umlenkbereich |
| 3 | Beladungsöffnung | 37b | Umlenkbereich |
| 4 | Heckklappe | 38 | Schenkel |
| 5 | Ladeboden | 39a | Ende |
| | | 39b | Ende |
| 6 | Transportvorrichtung | 40 | Abstand |
| 7 | Ladegut | | |
| 8 | Rahmen | 41 | Spanneinrichtung |
| 9 | Antriebsrolle | 42 | Deckenabschnitt |
| 10 | Umlenkrolle | 43 | Stirnabschnitt |
| | | 44 | Anschlussflansch |
| 11 | Transportband | 45 | Befestigungsnut |
| 12 | Stützauflage | | |
| 13 | Abdeckung | 46a | Sensor |
| 14 | Längsträger | 46b | Sensor |
| 15 | Querträger | 47 | Versteifungsrippe |
| | | 48 | Oberseite |
| 16 | Drehachse | 49 | Griffmulde |
| 17 | Abschlussträger | 50 | Abstand |
| 18 | Abschlussträger | | |
| 19 | Überdeckungsprofil | 51 | Steckstift |
| 20 | Achsabschnitt | 52 | Außenseite |
| | | 53 | Elektromotor |
| 21 | Achsaufnahme | 54a | Schaltleiste |
| 22 | Obertrum | 54b | Schaltleiste |
| 23 | Ladefläche | 55a | Spaltbereich |
| 24 | Gleitfläche | 55b | Spaltbereich |
| 25 | Untertrum | | |
| | | 56a | Vorderkante |
| 26 | Wand | 56b | Hinterkante |
| 27 | Führungselement | 57 | Befestigungselement |
| 28 | Aufnahmeschlitz | 58 | Schaltkörper |
| 29 | Vorsprung | 59 | Schaltkammer |
| 30 | Aufnahmeschlitz | 60 | Kontaktbereich |
| | | | |
| 31 | Führungsschiene | 61 | Kontaktbereich |
| 32 | Führungsfläche | 62 | Schaltfläche |
| 33 | Führungsteil | 63 | Bremseinrichtung |
| 34 | Führungselement | 64 | Bedieneinheit |
| 35 | Führungsfläche | 65 | Vor-Schalter |
| 66 | Zurück-Schalter | | |
| 68a | Sensor | | |
| 69a | Schaltleiste | | |
| | | | |
| 70 | Lagerteil | | |
| 71 | Achszapfen | | |
| 72 | Achskörper | | |
| 73 | Aufnahmeprofilabschnitt | | |
| 74 | Stützprofilabschnitt | | |
| | | | |
| 75 | Schaltprofilabschnitt | | |
| 76 | Schaltfläche | | |
| 77 | Schalter | | |
| | | | |
| 80a | Sensor | | |
| 80b | Sensor | | |
| 81a | Lichtsensor | | |
| 81b | Lichtsensor | | |
| | | | |
| 82a | Reflektor | | |
| 82b | Reflektor | | |
| 83 | Taststrahl | | |
| 84 | Montagehalter | | |
| 85 | Lagerteil | | |
| | | | |
| 86 | Lagerachse | | |
| 87 | Lagerbock | | |
| 88 | Mulde | | |
| 89 | Reserverad | | |
| 90 | Widerlager | | |
| | | | |
| 91 | Beladungsrichtung | | |
| 92 | Endladungsrichtung | | |

## Patentansprüche

1. Ladeboden (5) für ein Fahrzeug, mit einer Transportvorrichtung (6) zum Be- und Entladen eines Laderaumes (2) des Fahrzeuges, die eine Antriebsrolle (9) und Umlenkrolle (10) sowie ein um diese geführtes, endlos umlaufendes Transportband (11) aufweist, **dadurch gekennzeichnet, dass** zusätzlich Sensoren (46a, 46b; 68a, 68b; 80a, 80b) zur Erfassung einer Beladungs- und Entladungsposition sowie Steuerung der Antriebsrolle (9) vorgesehen sind, die in den Umlenkbereichen (37a, 37b) des Transportbandes (11) angeordnet sind.

2. Ladeboden nach Anspruch 1, **dadurch gekennzeichnet, dass** die Sensoren (46a, 46b; 68a, 68b; 80a, 80b) jeweils im radialen Spaltbereich (55a, 55b) zwischen einem Rahmen (8) der Transportvorrichtung (6), insbesondere einem in Richtung einer Drehachse (16) der Antriebs und Umlenkrolle (9,10) ausgerichteten Abschlusstrager (17, 18), und einer von der Antriebs- und Umlenkrolle (9, 10) abgewandten Außenseite (52) des Transportbandes (11) angeordnet sind.

3. Ladeboden nach Anspruch 1 oder 2, **dadurch gekennzeichnet, dass** die Sensoren (80a, 80b) jeweils durch opto-elektronische Sensoranordnungen (81a, 81b, 82a, 82b), insbesondere Laser- oder Infrarot-Sensoranordnung, gebildet sind, deren Taststrahl (83) quer über die Transportvorrichtung (6) in Richtung der Drehachse (16) der Antriebs- und Umlenkrolle (9, 10) verläuft.

4. Ladeboden nach Anspruch 3, **dadurch gekennzeichnet, dass** die Sensoren (80a, 80b) im Rahmen (8) integriert angeordnet oder an diesem über Montagehalter (84) oder im Laderaum (2) befestigt ist.

5. Ladeboden nach Anspruch 2, **dadurch gekennzeichnet, dass** jeder Sensor (46a, 46b; 68a, 68b) durch eine aus der Transportebene herausragende Schaltleiste (54a, 54b; 69a, 69b) gebildet ist, welche eine in den Spaltbereich (55a, 55b) hineinragende Schaltfläche (62; 76) aufweist.

6. Ladeboden nach Anspruch 5, **dadurch gekennzeichnet, dass** die Schaltleiste (54a, 54b; 69a, 69b) an einem, um eine parallel zur Drehachse (16) der Antriebs- und Umlenkrolle (9, 10) ausgerichtete Achse schwenkbaren Lagerteil (70) gehalten ist.

7. Ladeboden nach Anspruch 5, **dadurch gekennzeichnet, dass** die Schaltleiste (54a, 54b) am Rahmen (8) befestigt ist und einen Schaltkörper (58) mit einer in diesem integrierten Schaltkammer (59) und durch diese voneinander getrennte elektrisch, leitfähige Kontaktbereiche (60, 61) sowie eine dem Transportband (11) zugewandte, elastisch verformbare Schaltfläche (62) aufweist.

8. Ladeboden nach Anspruch 1, **dadurch gekennzeichnet, dass** die Transportvorrichtung (6) einen Rahmen (8) aufweist, an welchem in die Bewegungsbahn eines Ladegutes (7) vorragende oder in diese verstellbare und die Transportebene in Umlaufrichtung des Transportbandes (11) begrenzende Anschläge gelagert sind, die durch am Rahmen (8) vorgesehene Vorder und Hinterkanten (56a, 56b) gebildet sind oder im Bereich der Vorder- und Hinterkanten (56a, 56b) vorgesehene Dämpfüngsorgane für das zumindest teilweise Absorbieren der Aufprallenergie, wenn das Ladegut (7) gegen ein Dämpfungsorgan auffährt, aufweisen.

9. Ladeboden nach Anspruch 8, **dadurch gekennzeichnet, dass** die Dämpfungsorgane durch die einen aus elastisch nachgiebig reversiblen Kunststoff, beilspielsweise Thermoplast, hergestellten Schaltkörper (58) aufweisenden Schaltleisten (54a, 54b) gebildet sind.

10. Ladeboden nach Anspruch 5, **dadurch gekennzeichnet, dass** sich die Schaltleiste (54a, 54b; 69a, 69b) im Wesentlichen über die Breite des Transportbandes (11) durchgehend erstreckt.

11. Ladeboden nach Anspruch 1, **dadurch gekennzeichnet dass** sich ein Obertrum (22) vom Transportband (11) an einer Gleitfläche (24) abstützt, welche sich zwischen Längsträgern (14) eines Rahmens (8) der Transportvorrichtung (6) und der Antriebs- und Umlenkrolle (9, 10) durchgehend erstreckt.

12. Ladeboden nach Anspruch 1, **dadurch gekennzeichnet, dass** am Rahmen (8) der Transportvorrichtung (6) ein zwischen einem Obertrum (22) und Untertrum (25) vom Transportband (11) angeordnetes Schallabsorptionsbauelement aus Holz, Holzwerkstoff, Kunststoff oder einem Verbundwerkstoff, insbesondere einer Verbundplatte, befestigt ist.

13. Ladeboden nach Anspruch 12, **dadurch gekennzeichnet, dass** das Schallabsorptionsbauelement eine Gleitfläche (24) für ein Ober- und/oder Untertrum (22, 25) vom Transportband (11) ausbildet oder mit der Gleitfläche (24) für ein Ober- und/oder Untertrum (22, 25) vom Transportband (11) verbunden ist.

14. Ladeboden nach Anspruch 1, **dadurch gekennzeichnet, dass** die Antriebsrolle (9) mit einem Elektromotor (53) gekoppelt ist, welcher innerhalb der Antriebsrolle (9) angeordnet ist.

15. Ladeboden nach Anspruch 1, **dadurch gekennzeichnet, dass** die Antriebsrolle (9) mit einer innerhalb dieser angeordneten, elektrisch oder elektromechanisch betätigbaren Bremseinrichtung (63) versehen ist.

16. Ladeboden nach Anspruch 14, darduch **gekennzeichnet**, dass der Elektromotor (53) mit einer Bedieneinheit (64) zur Steuerung der Umlaufrichtung des Transportbandes (11) verbunden ist, die ihrerseits an eine Steuereinheit eines Fahrzeugstromsystems angeschlossen ist.

17. Ladeboden nach Anspruch 1, **dadurch gekennzeichnet, dass** der Rahmen (8) der Transportvorrichtung (6) und das Transportband (11) ineinander eingreifende Führungselemente (27, 34) mit komplementär ausgebildeten, insbesondere keilförmigen oder halbrunden Führungsflächen (32, 35) aufweisen, wovon das erste Führungselement (27) am Rahmen (8) dem Obertrum (22) des Transportbandes (11) zugeordnet ist und sich parallel zur Umlaufrichtung zwischen der Antriebs- und Umlenkrolle (9, 10) durchgehend erstreckt und das zweite Führungselement (34) am Transportband (11) sich in Umlaufrichtung über die gesamte Transportbandlänge durchgehend erstreckt.

18. Fahrzeug mit einem Laderaum (2) und einem in diesem angeordneten Ladeboden (5), **dadurch gekennzeichnet, dass** der Ladeboden (5) nach einem der Anspruche 1 bis 17 ausgebildet ist.

19. Fahrzeug nach Anspruch 18, **dadurch gekennzeichnet, dass** im Laderaum (2) in einer unterhalb des Ladebodens (5) verlaufenden Ebene eine Mulde (88), bevorzugt für ein Reserverad (89) vorgesehen ist und der Ladeboden (5) über einen Lagerteil (85) zwischen einer die Mulde (88) freigebenden Offnungsstellung und einer die Mulde (88) abdeckenden Schließstellung verstellbar im Laderaum (2) gelagert ist.

20. Fahrzeug nach Anspruch 19, **dadurch gekennzeichnet, dass** der Ladeboden (5) mit seinem einen Ende um eine Lagerachse (86) schwenkbar an einem im Laderaum (2) ortsfesten Lagerteil (85) gelagert ist.

21. Fahrzeug nach Anspruch 20, **dadurch gekennzeichnet, dass** die Antriebsrolle (9) am selben Ende des Ladebodens (5) wie die Lagerachse (86) angeordnet ist.

22. Fahrzeug nach Anspruch 19, **dadurch gekennzeichnet, dass** der Ladeboden (5) in einer zu Transportebene parallel verlaufenden Ebene verschiebbar in einem im Laderaum (2) ortsfesten Lagerteil gelagert ist.

## Claims

1. Loading compartment floor (5) for a motor vehicle with a conveyor system (6) for loading and unloading a loading compartment (2) of the vehicle, which comprises a drive roller (9) and guide roller (10) and a conveyor belt (11) continuously circulating around the latter, wherein sensors (46a, 46b; 68a, 68b; 80a, 80b) are additionally provided as a means of detecting a loading and an unloading position and a means of controlling the drive roller (9), which are disposed in the pulley regions (37a, 37b) of the conveyor belt (11).

2. Loading compartment floor according to claim 1, wherein the sensors (46a, 46b; 68a, 68b; 80a, 80b) are respectively disposed in a radial gap region (55a, 55b) between a frame (8) of the conveyor system (6), in particular a terminal member (17, 18) oriented in the direction of a rotation axis (16) of the drive and guide rollers (9, 10), and an external face (52) of the conveyor belt (11) facing away from the drive and guide rollers (9, 10).

3. Loading compartment floor according to claim 1 or 2, wherein the sensors (80a, 80b) respectively comprise optoelectronic sensor arrays (81 a, 81b, 82a, 82b), in particular laser or infrared sensor arrays, the scanning beam (83) of which runs transversely across the conveyor system (6) in the direction of the rotation axis (16) of the drive and guide rollers (9, 10)..

4. Loading compartment floor according to claim 3, wherein the sensors (80a, 80b) are integrated in the frame (8) or secured on it by means of mounting holders (84) or secured in the loading compartment (2).

5. Loading compartment floor according to claim 2, wherein every sensor (46a, 46b; 68a, 68b) comprises a switch block (54a, 54b; 69a, 69b) projecting from the transport plane, which has a switch block surface (62; 76) projecting into the gap region (55a, 55b).

6. Loading compartment floor according to claim 5, wherein the switch block (54a, 54b; 69a, 69b) is retained on a bearing part (70) which can be pivoted about an axis oriented in parallel with the rotation axis (16) of the drive and guide rollers (9, 10).

7. Loading compartment floor according to claim 5, wherein the switch block (54a, 54b) is secured to the frame (8) and comprises a switch body (58) with an integral switch compartment (59) and conductive contact regions (60, 61) separated from one another by it as well as an elastically deformable switch surface (62) facing the conveyor belt (11).

8. Loading compartment floor according to claim 1, wherein the conveyor system (6) has a frame (8) on which stops are mounted projecting into or displaceable into the displacement path of an item of cargo (7) and which limit the transport plane in the circulation direction of the conveyor belt (11), which are formed by front and rear edges (56a, 56b) provided on the frame (8), or comprise damping elements disposed in the region of the front and rear edges (56a, 56b) for at least partially absorbing impact energy if the item of cargo (7) hits a damping element.

9. Loading compartment floor according to claim 8, wherein the damping elements comprise switch blocks (54a, 54b) incorporating a switch body (58) made from an elastically flexible, reversible plastic, for example a heat-deformable plastic.

10. Loading compartment floor according to claim 5, wherein the switch block (54a, 54b; 69a, 69b) extends essentially continuously across the width of the conveyor belt (11).

11. Loading compartment floor according to claim 1, wherein a top strand (22) of the conveyor belt (11) is supported on a slide surface (24) which extends continuously between longitudinal members (14) of the frame (8) of the conveyor system (6) and the drive and guide rollers (9, 10).

12. Loading compartment floor according to claim 1, wherein a sound-absorbing component of wood, a wood-based material, plastic or a composite material, in particular a composite board, is secured to the frame (8) of the conveyor system (6) between a top strand (22) and a bottom strand (25) of the conveyor belt (11).

13. Loading compartment floor according to claim 12, wherein the sound-absorbing component forms a slide surface (24) for a top and/or bottom strand (22, 25) of the conveyor belt (11) or is connected to the slide surface (24) for a top and/or bottom strand (22, 25) of the conveyor belt (11).

14. Loading compartment floor according to claim 1, wherein the drive roller (9) is coupled with an electric motor (53) disposed inside the drive roller (9).

15. Loading compartment floor according to claim 1, wherein the drive roller (9) has an electrically or electromechanically operated brake mechanism (63) disposed inside it.

16. Loading compartment floor according to claim 14, wherein the electric motor (53) is connected to a control unit (64) for controlling the circulation direction of the conveyor belt (11) and is in turn connected to a control unit of a motor vehicle power system.

17. Loading compartment floor according to claim 1, wherein the frame (8) of the conveyor system (6) and the conveyor belt (11) comprise mutually engaging guide elements (27, 34) with complementary, in particular wedge-shaped or semi-rounded, guide surfaces (32, 35), of which the first guide element (27) on the frame (8) is assigned to the top strand (22) of the conveyor belt (11) and extends continuously in parallel with the circulation direction between the drive and guide rollers (9, 10), and a second guide element (34) on the conveyor belt (11) extends continuously in the circulation direction across the entire conveyor belt length.

18. Motor vehicle with a loading compartment (2) and a loading compartment floor (5) disposed in it, wherein the loading compartment floor (5) is of a design according to one of claims 1 to 17.

19. Motor vehicle according to claim 18, wherein a depression (88) is provided in the loading compartment (2) in a plane extending underneath the loading compartment floor (5), preferably for a spare wheel (89), and the loading compartment floor (5) is mounted in the loading compartment (2) by means of a bearing part (85) so that it can be moved between an open position releasing the depression (88) and a closed position covering the depression (88).

20. Motor vehicle according to claim 19, wherein the loading compartment floor (5) is mounted on a stationary bearing part (85) in the loading compartment (2) by one end so as to be pivotable about a bearing shaft (86).

21. Motor vehicle according to claim 20, wherein the drive roller (9) is disposed at the same end of the loading compartment floor (5) as the bearing shaft (86).

22. Motor vehicle according to claim 19, wherein the loading compartment floor (5) is mounted in a stationary bearing part in the loading compartment (2) so as to be displaceable in a plane extending in parallel with the transport plane.

## Revendications

1. Sol de chargement (5) pour un véhicule, avec un dispositif de transport (6) pour le chargement et le déchargement d'une enceinte de chargement (2) du véhicule, qui présente un rouleau d'entraînement (9) et un rouleau de renvoi (10) ainsi qu'une bande de transport sans fin (11) guidée autour de ceux-ci, **caractérisé en ce que** sont prévus de plus des capteurs (46a, 46b; 68a, 68b; 80a, 80b) pour la détection d'une position de chargement et de déchargement ainsi que pour la commande du rouleau d'entraînement (9) qui sont disposés dans les zones de renvoi (37a, 37b) de la bande de transport (11).

2. Sol de chargement selon la revendication 1, **caractérisé en ce que** les capteurs (46a, 46b; 68a, 68b; 80a, 80b) sont disposés respectivement dans une zone de fente radiale (55a, 55b) entre un châssis (8) du dispositif de transport (6), en particulier un support terminal (17, 18) orienté dans la direction d'un axe de rotation (16) des rouleaux d'entraînement et de renvoi (9, 10) et un côté extérieur (52) de la bande de transport (11) éloigné des rouleaux d'entraînement et de renvoi (9, 10).

3. Sol de chargement selon la revendication 1 ou 2, **caractérisé en ce que** les capteurs (80a, 80b) sont formés à chaque fois par des agencements de capteur opto-électroniques (81a, 81b, 82a, 82b), en particulier agencement de capteurs laser ou infrarouge, dont le rayon de palpage (83) s'étend transversalement sur le dispositif de transport (6) en direction de l'axe de rotation (16) des rouleaux d'entraînement et de renvoi (9, 10).

4. Sol de chargement selon la revendication 3, **caractérisé en ce que** les capteurs (80a, 80b) sont intégrés dans le châssis (8) ou est fixé à celui-ci par des supports de montage (84) ou dans l'espace de chargement (2).

5. Sol de chargement selon la revendication 2, **caractérisé en ce que** chaque capteur (46a, 46b; 68a, 68b) est formé par une barre de commutation (54a, 54b; 69a, 69b) faisant saillie du plan de transport, qui présente une face de commutation (62; 76) faisant saillie dans la zone de fente (55a, 55b).

6. Sol de chargement selon la revendication 5, **caractérisé en ce que** la barre de commutation (54a, 54b; 69a, 69b) est retenue à une partie de palier (70) apte à pivoter autour d'un axe orienté parallèlement à l'axe de rotation (16) du rouleau d'entraînement et de renvoi (9, 10).

7. Sol de chargement selon la revendication 5, **caractérisé en ce que** la barre de commutation (54a, 54b) est fixée au châssis (8) et présente un corps de commutation (58) avec une chambre de commutation (59) intégrée dans celui-ci et des zones de contact électriquement conductrices (60, 61) séparées l'une de l'autre par celle-ci ainsi qu'une face de commutation (62) élastiquement déformable orientée vers la bande de transport (11).

8. Sol de chargement selon la revendication 1, **caractérisé en ce que** le dispositif de transport (6) présente un châssis (8) auquel sont logées des butées faisant saillie dans la trajectoire d'une marchandise à charger (7) ou ajustable dans celle-ci et délimitant le plan de transport dans la direction de rotation de la bande de transport (11), qui sont formées par des arêtes avant et arrière (56a, 56b) prévues au châssis (8) ou par des organes d'amortissement prévus au voisinage des arêtes avant et arrière (56a, 56b) pour l'absorption au moins partielle de l'énergie de choc lorsque la marchandise à charger (7) vient contre un organe d'amortissement.

9. Sol de chargement selon la revendication 8, **caractérisé en ce que** les organes d'amortissement sont formés par des barres de commutation (54a, 54b) présentant un corps de commutation (58) réalisé en un matériau synthétique élastique résiliant réversible, par exemple un matériau thermoplastique.

10. Sol de chargement selon la revendication 5, **caractérisé en ce que** la barre de commutation (54a, 54b; 69a, 69b) s'étend sensiblement en continu sur la largeur de la bande de transport (11).

11. Sol de chargement selon la revendication 1, **caractérisé en ce qu'**un brin supérieur (22) de la bande de transport (11) s'appuie sur une face de glissement (24) qui s'étend en continu entre des supports longitudinaux (14) d'un châssis (8) du dispositif de transport (6) et le rouleau d'entraînement et de renvoi (9, 10).

12. Sol de chargement selon la revendication 1, **caractérisé en ce qu'**est fixé au châssis (8) du dispositif de transport (6) un élément de construction absorbant le son en bois, matériau de bois, matériau synthétique ou un matériau composite, en particulier une plaque composite, disposé entre un brin supérieur (22) et un brin inférieur (25) de la bande de transport (11).

13. Sol de chargement selon la revendication 12, **caractérisé en ce que** l'élément de construction absorbant le son réalise une face de glissement (24) pour un brin supérieur et/ou inférieur (22, 25) de la bande de transport (11) ou est relié à la face de glissement (24) pour un brin supérieur et/ou inférieur (22, 25) de la bande de transport (11).

14. Sol de chargement selon la revendication 1, **caractérisé en ce que** le rouleau d'entraînement (9) est couplé à un moteur électrique (53) qui est disposé à l'intérieur du rouleau d'entraînement (9).

15. Sol de chargement selon la revendication 1, **caractérisé en ce que** le rouleau d'entraînement (9) est pourvu d'une installation de freinage (63) disposée à l'intérieur de celui-ci, actionnable électriquement ou électro-mécaniquement.

16. Sol de chargement selon la revendication 14, **caractérisé en ce que** le moteur électrique (53) est relié à une unité de commande (64) pour commander la direction de rotation de la bande de transport (11), qui est reliée à son tour à une unité de commande d'un système du courant du véhicule.

17. Sol de chargement selon la revendication 1, **caractérisé en ce que** le châssis (8) du dispositif de transport (6) et la bande de transport (11) présentent des éléments de guidage (27, 34) venant en prise les uns avec les autres avec des faces de guidage complémentaires, (32, 35) en particulier coniques ou demi-rondes, où le premier élément de guidage (27) du châssis (8) est associé au brin supérieur (22) de la bande de transport (11) et s'étend en continu parallèlement à la direction de rotation entre le rouleau d'entraînement et de renvoi (9,10), et le deuxième élément de guidage (34) à la bande de transport (11) s'étend en continu dans la direction de rotation sur toute la longueur de la bande de transport.

18. Véhicule avec un espace de chargement (2) et un sol de chargement (5) disposé dans celui-ci, **caractérisé en ce que** le sol de chargement (5) est réalisé selon l'une des revendications 1 à 17.

19. Véhicule selon la revendication 18, **caractérisé en ce qu'**il est prévu dans l'espace de chargement (2), dans un plan s'étendant en dessous du sol de chargement (5), un creux (88), de préférence pour une roue de secours (89), et le sol de chargement (5) est logé par une partie de palier (85) entre une position d'ouverture libérant le creux (88) et une position de fermeture recouvrant le creux (88) d'une manière ajustable dans l'espace de chargement (2).

20. Véhicule selon la revendication 19, **caractérisé en ce que** le sol de chargement (5) est logé à une partie de palier (85) stationnaire dans l'espace de chargement d'une manière pivotante avec une extrémité autour d'un axe de palier (86).

21. Véhicule selon la revendication 20, **caractérisé en ce que** le rouleau d'entraînement (9) est disposé à la même extrémité du sol de chargement (5) que l'axe de palier (86).

22. Véhicule selon la revendication 19, **caractérisé en ce que** le sol de chargement (5) est logé d'une manière déplaçable dans un plan s'étendant parallèlement au plan de transport dans une partie de palier stationnaire dans l'espace de chargement (2).
